# EUROPEAN PATENT APPLICATION

(11) **EP 3 859 999 A1**
(43) Date of publication of application: **04.08.2021**
(21) Application number: 20154568.8
(22) Date of filing: 30.01.2020
(51) Int. Cl.: H04B 10/11, H04B 10/40, H04B 10/50, H04B 10/61

(54) **OPTIC COMMUNICATION METHOD, SYSTEM, TRANSMITTER AND RECEIVER**

(71) Applicant: Nederlandse Organisatie voor toegepast- natuurwetenschappelijk Onderzoek TNO, 2595 DA 's-Gravenhage (NL)
(72) Inventor: DRESSCHER, Martijn, 2595 DA's-Gravenhage (NL)
(74) Representative: V.O.

(57) **Abstract**

An optic communication system (10) is disclosed herein that comprises a first (100) and a second module (200). The first module (100) comprises a plurality of lasers (110_1, 110_2, ..., 110_n) for providing respective optic output signals (O1, O2, ..., On) in respective wavelength channels with a respective wavelength range. A wavelength division multiplexer (120) multiplexes said respective optic output signals into a bundled optic output signal (Oc) and a transmission unit (130) transmits the bundled optic output signal (Oc) as transmitted optic output signal (Otrans). The second module (200) comprises a receiving unit (210) to receive a bundled optic input signal (Orec) resulting from the bundled optic output signal after its propagation to the receiving unit. A wavelength division demultiplexer (220) demultiplexes the bundled optic input signal into respective optic signal components (I1, I2, ...,In) in said respective wavelength channels; and respective photon counters (230_1, 230_2, ...., 230_n) provide respective photon count signals (C1, C2, ..., Cn) for said respective optic signal components.

## Description

### BACKGROUND

### Field of the invention

The present application relates to an optic communication method.

The present application further relates to an optic communication system.

The present application further relates to an optic transmitter.

The present application still further relates to an optic receiver.

### Related art

Free-space optical communication is an optical communication technology that uses light propagating in free space to wirelessly transmit data for telecommunications or computer networking. "Free space" means air, outer space, vacuum, or something similar. Free-space optical communication implies a transmission of an optic signal in free space between a first and a second optic communication station. The first and the second optic communication station may be provided on a respective carrier such as a satellite or a celestial body, such as the earth or the moon. Hence transmission can for example take place between two satellites, between a satellite and the earth, etc. The optical communication may be uni-directional or bi-directional. The technology is useful where the physical connections are impractical due to high costs or other considerations.

US 2019/115979 discloses an optic communication system comprising an optic transmitter and an optic receiver.

The transmitter comprises a polarization maintaining optical fiber having a slow axis and a fast axis, a fiber optic coupler, a first laser to emit light with a first polarization axis aligned to the slow axis and a second laser to emit light with a second polarization axis aligned to the fast axis. In operation the fiber optic coupler is controlled to selectively output electromagnetic radiation emitted from the first laser representing a first binary state or electromagnetic radiation emitted from the second laser representing a second binary state and
- a polarization maintaining optical fiber having a slow axis and a fast axis;
- a fiber optic coupler comprising a first coupler input, a second coupler input, and a coupler output, wherein the coupler output is coupled to the optical fiber;
- a first laser connected to the first coupler input, wherein a first polarization axis of light emitted from the first gated laser is aligned to the slow axis.

The optic receiver comprises a camera, comprising an array of imaging pixels; and a circuit connected to each of the pixels.

Each of the pixels detects one or more photons received on the pixel when a first clock signal or a second clock signal are applied to the pixels. The clock signals have a rate that is a multiple of a transmission rate of a beacon signal transmitted from a source, and the first clock signal is phase shifted by 90 degrees with respect to the second clock signal. The first and second clock signals each comprise a first time slot and a second time slot immediately after the first time slot, the first and second time slots having equal time duration that is substantially similar to an average on time of the beacon signal. The circuit counts for each pixel a number of photons in each of these time slots and computes a statistic W from these counts. The pixel having the highest value for W is associated with one or more image pixels in an image generated by the camera to identifies a location of the source as being in the one or more image pixels.

The photon count based detection enables a power efficient communication over large distances. It is a disadvantage however, that the channel capacity in terms of bits/second that can be communicated is limited.

### SUMMARY

It is an object of the present disclosure to address the above-mentioned disadvantage.

In accordance with a first aspect, an improved optic communication method is provided that comprises the following steps.
- providing respective optic output signals in respective wavelength channels. I.e. the optic output signal is provided in a respective wavelength range
- multiplexing said respective optic output signals into a bundled optic output signal;
- transmitting the bundled optic output signal;
- receiving a bundled optic input signal resulting from the bundled optic output signal after its propagation;
- demultiplexing the optic input signal into respective optic signal components in said respective wavelength channels corresponding to said wavelength ranges; and
- providing respective photon count signals for said respective optic signal components in the respective wavelength ranges.

For example several hundreds of optic output signals may be multiplexed into a single bundled optic output signal. In this way the channel capacity can be substantially increased.

In this multiplexed optic output signal, the individual optic output signals have at least substantially the same direction and divergence. Nevertheless, the individual optic output signals in the bundle do not need to exactly overlap. Typically a translation between a pair of optic signals in the bundle is acceptable as long as it is substantially (e.g. 100 times) smaller than the bundle diameter of optic signal beams at the point of receipt thereof.

The improved optic communication method may be realized with an improved optic communication system according to a second aspect that comprises a first module and a second module.

Therein the first module comprises a plurality of lasers, a wavelength division multiplexer, and a transmission unit. The plurality of lasers provide respective optic output signals in respective wavelength channels. Each wavelength channel corresponds to a respective wavelength range. The wavelength division multiplexer bundles the respective optic output signals into a bundled optic output signal. The bundled optic output signal, in which the respective optic output signals have at least substantially the same direction and divergence is transmitted by the transmission unit.

The second module comprises a receiving unit, a wavelength division demultiplexer and a plurality of photon counters. The receiving unit is configured to receive a bundled optic input signal that results from the bundled optic output signal after its propagation to the receiving unit and the wavelength division demultiplexer demultiplexes this bundled optic input signal into respective optic signal components in said respective wavelength channels defined by a respective wavelength range. Respective sets of one or more photon counters provide respective photon count signals for these optic signal components. Providing a set with a plurality of photon counters may be useful in cases where the magnitude of the signal would exceed the counting capacity of a single photon counter.

Due to the fact that the optic output signals are transmitted as a single bundled optic output signal, overhead resulting for example from mutually pointing the transmitter and the receiver is not increased.

In an embodiment the first and the second module of the improved optic communication system may be provided separate from each other. For example, in a one-way optic communication system, the first module may be provided at a first location, and the second module may be provided at a second location at distance from the first module.

Hence, according to a third aspect, an improved optic transmitter is provided that comprises a plurality of lasers, a wavelength division multiplexer, and a transmission unit. The plurality of lasers provide respective optic output signals in respective wavelength channels and the wavelength division multiplexer bundles the respective optic output signals into a bundled optic output signal, which is transmitted by the transmission unit.

Various options are available to optically couple the elements of the improved optic transmitter. According to a first option, the elements are provided as bulk optics (or free-space optics). In this case the optic output signals of the lasers propagate in free space to the wavelength division multiplexer, e.g. a grating, and likewise the bundled optic output signal of the wavelength division multiplexer propagates in free space to the transmission unit. In this option a high signal power is possible.

According to a second option, the elements of the improved optic transmitter are optically coupled by fiber optics.

In an embodiment of the optic transmitter the plurality of lasers is integrated in a single photonic integrated circuit. Therewith a very compact implementation can be achieved, even when using a high number of lasers. A generally used material platform for photonic integrated circuits is indium phosphide (InP). Comparable therewith is GaAs. This allows for the integration of various optically active and passive functions on the same chip. The lasers therein may for example be provided as 2 section distributed Bragg reflector (DBR) lasers, consisting of two independently controlled device sections - a gain section and a DBR mirror section. However, also other materials are suitable as a platform for this purpose. Silicon can, even though it is an indirect bandgap material, still be used to generate laser light via the Raman nonlinearity. Such lasers are not electrically driven but optically driven and therefore still necessitate a further optical pump laser source. Still further examples are electro-optic crystals such as lithium niobate, silica on silicon, Silicon on insulator, and various polymers. These different material systems may be selected from to achieve specific advantages or to avoid specific limitations depending on the function to be integrated. For instance, silica (silicon dioxide) based PICs have very desirable properties for passive photonic circuits such as AWGs (see below) due to their comparatively low losses and low thermal sensitivity, GaAs or InP based PICs allow the direct integration of light sources and Silicon PICs enable co-integration of the photonics with transistor based electronics.

In a variant of that embodiment the wavelength division multiplexer (WDM) is integrated with the plurality of lasers in the single photonic integrated circuit. Arrayed waveguide gratings (AWG) may be used for this purpose. Nevertheless a fiber or bulk optics implementation may be alternatively contemplated. The optic transmitter in that embodiment, the variant thereof or another embodiment thereof may be a first module in the improved optic communication system.

In an embodiment, of the optic transmitter the plurality of lasers is configured to provide their optic output signals in a pulse wise manner. Therewith a further power reduction is possible. A pulse wise operation may for example be suitable in time intervals where only a low data rate is required. In a special case thereof, for example for the purpose of quantum key distribution, the optic output signals are provided as single photon pulses.

Furthermore, according to a fourth aspect, an improved optic receiver is provided that comprises a receiving unit, a wavelength division demultiplexer and a plurality of photon counters. The receiving unit is configured to receive a bundled optic input signal that results from the bundled optic output signal after its propagation to the receiving unit and the wavelength division demultiplexer demultiplexes this bundled optic input signal into respective optic signal components in said respective wavelength channels. Respective sets of one or more photon counters provide respective photon count signals for these optic signal components.

Likewise various options are available to optically couple the elements of the improved optic receiver. In an embodiment the elements, comprising the wavelength division demultiplexer and the respective detectors are integrated in a single photonic integrated circuit. In particular an implementation of the wavelength division demultiplexer renders possible the separation of bundled optical signals with a high number, e.g. more than 100 optical components. The optic receiver in that or another embodiment may be a second module in the optic communication system.

Interfaces may be provided between various system parts, i.e. a bulk-fiber interface, a fiber-PIC interface, a bulk-PIC interface, a PIC-fiber interface, a fiber-bulk interface or a PIC-bulk interface.

An optic communication arrangement may be provided that comprises a first and a second improved optic transmitter and a first and a second improved optic receiver as specified above. Therein the first optic transmitter and the first optic receiver are arranged at a first location and the second optic transmitter and the second optic receiver are arranged at a second location remote from the first location. The first optic transmitter in the arrangement is configured to transmit a first bundled optic output signal to the second optic receiver and the second optic transmitter is configured to transmit a second bundled optic output signal to the first optic receiver. In an embodiment of this optic communication arrangement the first optic transmitter and the first optic receiver are provided as a first photonic integrated circuit at the first location and the second optic transmitter and the second optic receiver are provided as a second photonic integrated circuit at the second location. Alternatively separate photonic integrated circuits may be used for each of the first optic transmitter, the first optic receiver the second optic transmitter and the second optic receiver.

### BRIEF DESCRIPTION OF THE DRAWINGS

These and other aspects are described in more detail with reference to the drawing. Therein:
FIG. 1A, 1B, 1C schematically shows an embodiment of the improved communication system 10. Therein FIG. 1A shows an overview of the communication system and FIG. 1B and 1C respectively show an optic transmitter as a first module being and an optic receiver as a second module in more detail.
FIG. 2 shows an embodiment of an optic communication arrangement that comprises a first and a second optic transceiver.
FIG. 3 shows in more detail an embodiment of the optic communication arrangement of FIG. 2.
FIG. 4 shows in more detail a further embodiment of the optic communication arrangement of FIG. 2.
FIG. 5A and FIG. 5B show a first and a second embodiment of the improved method.

### DETAILED DESCRIPTION OF EMBODIMENTS

Like reference symbols in the various drawings indicate like elements unless otherwise indicated.

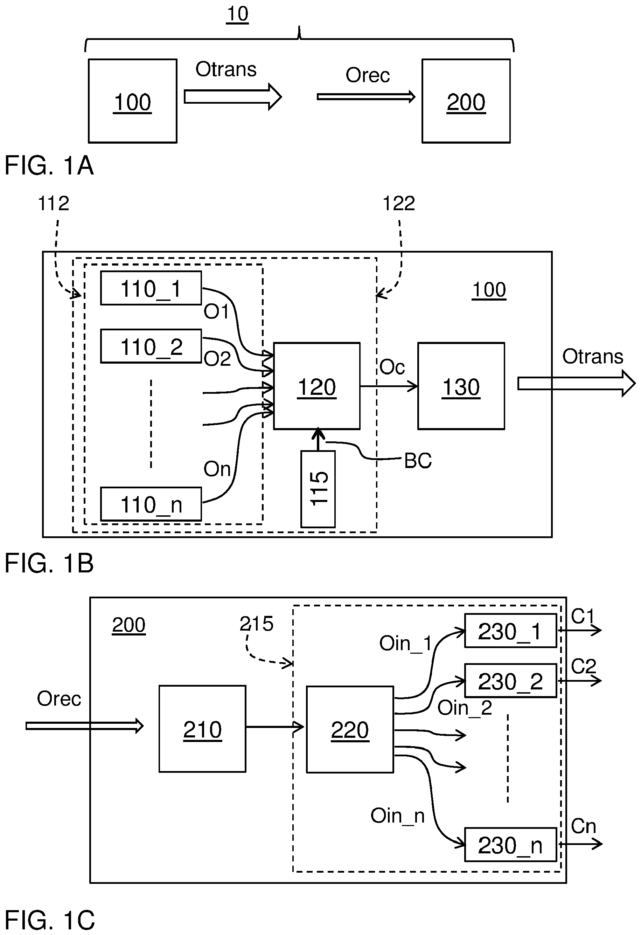

FIG. 1A, 1B, 1C schematically shows an embodiment of the improved communication system 10. Therein FIG. 1A shows an overview of the communication system and FIG. 1B and 1C show a first module 100 being an optic transmitter and a second module 200 being an optic receiver, in more detail.

As shown in FIG. 1B, the first module, being the optic transmitter 100 comprises a plurality of lasers 110_1, 110_2,...,110_n , a wavelength division multiplexer 120, and a transmission unit 130.

In operation, the plurality of lasers 110_1, 110_2, ..., 110_n provide respective optic output signals O1, O2, ..., On in respective wavelength channels. Modulation of the respective optic output signals may be achieved in various ways. According to a first approach (direct modulation) a laser is directly controlled. According to a second approach (external modulation), this is achieved by an external mechanism. The wavelength division multiplexer 120 multiplexes the optic output signals O1, O2, ..., On into a bundled optic output signal Oc, and the transmission unit 130 transmits the bundled optic output signal Oc as a transmitted optic output signal Otrans. The transmission unit 130 may comprise various additional functionalities, such as a pointing functionality to accurately direct the bundled optic output signal towards an optical receiver, and to correct therewith for vibrations. As another example a pre-correction functionality may be included to correct for anticipated effects of atmospheric perturbations.

As shown in FIG. 1C the second module 200, being the optic receiver comprises a receiving unit 210, a wavelength division demultiplexer 220 and a plurality of photon counters 230_1, 230_2,...,230_n. In operation, the receiving unit 210 receives the bundled optic input signal Orec that results from the bundled optic output signal Otrans after its propagation to the optic receiver and the wavelength division demultiplexer 220 demultiplexes this bundled optic input signal into respective optic signal components Oin_1, Oin_2,...,Oin_n in the respective wavelength channels. The photon counters 230_1, 230_2,...,230_n each provide respective photon count signals C1, C2,...,Cn for these optic signal components.

The wavelength channels reserved for each optic output signals O1, O2, ..., On, to be detected as optic signal components Oin_1, Oin_2,...,Oin_n, may have a bandwidth of a few pm to a few tens of nm depending on the technology used. The lasers 110_1, 110_2, ..., 110_n may for example have an output power in the range of a few mW or lower. In embodiments one, more or all of the lasers may be configured to provide their optic output signals in a pulse wise manner. In some embodiments the optic output signals may be provided as single photon pulses.

An additional laser 115 may be included to provide a beacon signal BC. The beacon signal typically has a higher power then that of the optic output signals O1, O2, ..., On. It may be pulsed to keep power consumption low. The beacon signal is typically provided in parallel with the optic output signals O1, O2, ..., On in the bundled optic output signal Oc. In some embodiments of the optic transmitter 100, the plurality of lasers 110_1, 110_2, ..., 110_n is integrated in a single photonic integrated circuit 112, as schematically indicated by a dotted box. Furthermore, the wavelength division multiplexer 120 may be integrated with the plurality of lasers 110_1, 110_2, ..., 110_n in a single photonic integrated circuit (indicated as dotted box 122). Still further, the optic transmitter 100 may be entirely provided as a single photonic integrated circuit. Alternatively, the elements of the transmitter may be provided as bulk components or may be optically coupled by optic fiber connections.

The receiving unit 210 of the optic receiver 200 typically comprises pointing means, for example using an adaptive optic element, that is controlled on the basis of the beacon signal. Likewise the optic transmitter 100 typically has a pointing means to properly direct the bundled optic output signal Oc as a transmitted optic output signal Otrans towards the optic receiver 200, for example based on feedback signals from the optic receiver 200, or from a retroreflector being part of the receiver.

The wavelength division demultiplexer 220 may use spectral filtering to demultiplex the bundled optic input signal into respective optic signal components Oin_1, Oin_2, ...,Oin_n.

Examples of photon counters are a photomultiplier, Geiger counter, single-photon avalanche diode, high TRL photon avalanche diode, superconducting nanowire single-photon detector, transition edge sensor, or scintillation counter. Charge-coupled devices can also sometimes be used.

As shown schematically by dotted box 215, the wavelength division demultiplexer 120 and the photon counters 230a, 230b, ...., 230n may be integrated in a single photonic integrated circuit. Still further, the optic receiver 200 may be entirely provided as a single photonic integrated circuit. In an embodiment the receiving unit 210 and the wavelength division multiplexer 220 may be integrated in single photonic integrated circuit, for example via photonic phased array interface using bulk optics for pointing the receiver towards the associated transmitter.

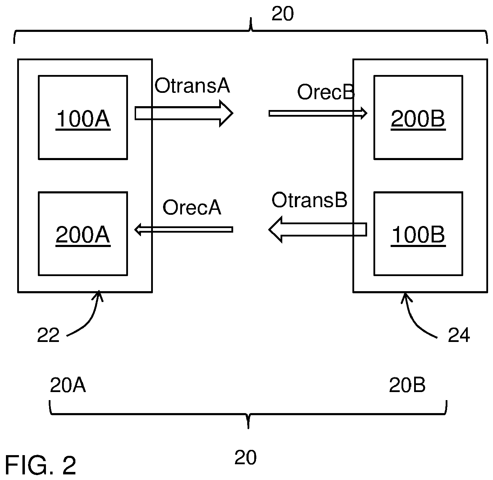

FIG. 2 shows an embodiment of an optic communication arrangement 20 that comprises a first and a second optic transceiver 20A, 20B. The first optic transceiver 20A comprises a first optic transmitter 100A and a first optic receiver 200A. The second optic transceiver 20B comprises a second optic transmitter 100B and a second optic receiver 200B. In the embodiment shown, the first optic transmitter 100A and the first optic receiver 200A are provided as a first photonic integrated circuit 22 at a first location and the second optic transmitter 100B and the second optic receiver 200B are provided as a second photonic integrated circuit 24 at a second location.

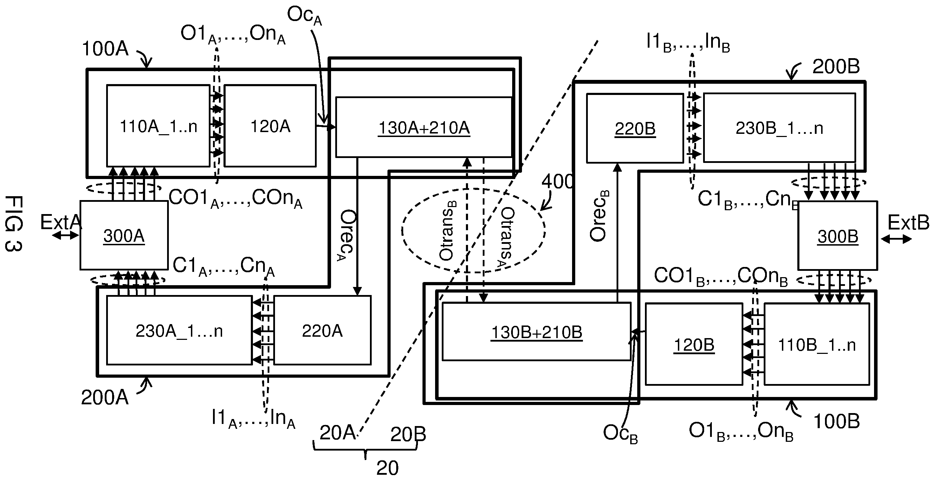

FIG. 3 shows in more detail an embodiment of the optic communication arrangement 20 of FIG. 2. As shown therein, the first optic transceiver 20A comprises in addition to the first optic transmitter 100A and the first optic receiver 200A also a first modem 300A. The second optic transceiver 20B comprises in addition to a second optic transmitter 100B and a second optic receiver 200B also a second modem 300B. The first optic transmitter 100A and the first optic receiver 200A share a common PAT-unit that has the functionality of a first transmission unit 130A and a receiving unit 210A. The common PAT-unit may provide common facilities for pointing and receiving.

The PAT-unit has an active pointing functionality (such as moving mirrors or phased array) that directs the bundle in the desired direction. The incoming bundle comes from almost the same direction. The angle difference between the transmit and receive bundle is the point-ahead angle (PAA). This angle anticipates displacements of the terminals occurring during transmission of the signal between the transceivers 20A and 20B. The PAA is often small, so that the transmitted and received bundle can partly traverse a shared optical path.

A typical procedure is as follows:
1) The PAT-unit locks in on the direction of the received bundle (with a moving mirror for example), so that the bundle is well focused; and
2) The transmit bundle is directed with a separate mirror (not in shared optical path) to introduce a PAA relative to the received bundle
3) Then both bundles are projected on a common image detector to check if the PAA is correct. The PAA is controlled to achieve that both bundles are in the same optical path and the received bundle is locked.

Also other approaches, for example based on PIC technology (such as photonic phased array) may be contemplated. This avoids use of expensive mirrors, so that from a cost perspective there is no need to have a shared optical path for receiving and transmitting functionalities. For example, but not necessarily a phased array per wavelength may be provided so that the beam is completely spatially multiplexed.

Likewise, units 120 and 220 may be integrated. In operation the first modem 300A receives input signals, e.g. electric or optic input signals, from an external interface ExtA and issues a set of control signals CO1_{A},...,COn_{A}. In response thereto respective lasers 110A_1, ...,n provide respective optic output signals O1_{A},...,On_{A} in respective wavelength channels with a respective wavelength range, each having a respective central wavelength *λ*_1, ..., *λ*_*n* . In an embodiment the lasers 110A_1, ...,n and respective drivers are provided in a photonic integrated circuit. Such a product is for example available from Lionix using a hybrid assembly approach wherein low-loss silicon-nitride PIC is combined with active gain PICs. To that end tunable gain section PIC in InP technology is hybridly attached to a tunable reflector PIC, therewith creating an external cavity laser. The gain section creates the first mirror and the necessary gain, whereas the silicon-nitride based TriPleX™ PIC acts as a tunable wavelength dependent mirror. Therewith wavelength channels with a very narrow bandwidth, e.g. a Lorentz linewidth of less than 10 kHz can be achieved. The wavelength channels may for example be provided within an overall range extending between 1530-1565 nm. But also other wavelength ranges are feasible.

The wavelength division multiplexer 120A bundles these optic output signals into a bundled optic output signal Oc_{A} and provides the bundled optic output signal Oc_{A} to the PAT-unit 130A+210A. The wavelength division multiplexer 120A may also be provided in the same photonic integrated circuit as the lasers, but may alternatively be a separate unit, for example also a photonic integrated circuit or fiber based. Fiber optic couplers for this purpose are for example provided by Newport. An example thereof is a 1 x 16 fiber optic coupler of type F-CPL-F16150.

The PAT-unit 130A+210A transmits the bundled optic output signal Oc_{A} as a transmitted optic output signal OtransA through free space 400 to the second optic transceiver 20B. In an embodiment the PAT-unit 130A+210A is implemented as a photonic phased array in a photonic integrated circuit. Such an approach is described byMcManamon et al. in "Optical phased array technology", Proceedings of the IEEE (Volume: 84 , Issue: 2 , Feb. 1996), page(s): 268 - 298 DOI: 10.1109/5.482231. In the optic phase array proposed therein, a phase profile is imposed on an optical beam as it is either transmitted through or reflected from the phase shifter array. The imposed phase profile steers, focuses, fans out, or corrects phase aberrations on the beam. The array of optical phase shifters is realized through lithographic patterning of an electrical addressing network on the superstrate of a liquid crystal waveplate. Refractive index changes sufficiently large to realize full-wave differential phase shifts can be effected using low (<10 V) voltages applied to the liquid crystal phase plate electrodes.

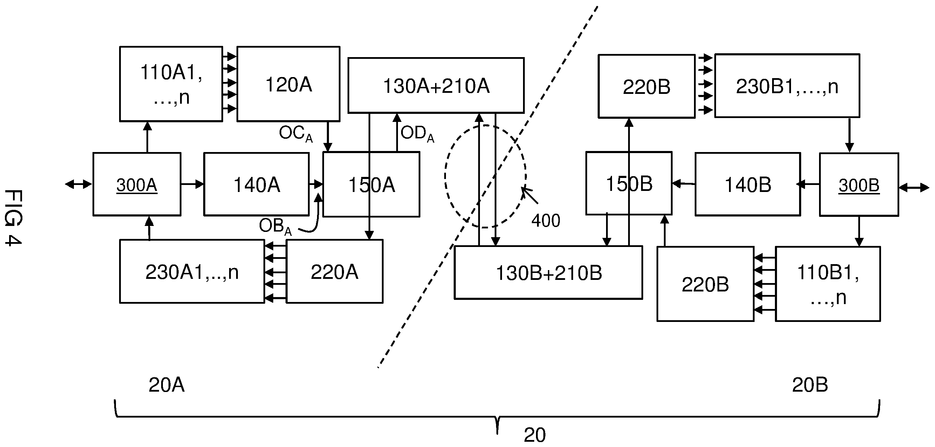

Alternatively traditional means using actuated mirrors are also possible (bulk optics). These use of adaptive optics with a beacon (higher power light source) as for example described with reference to FIG. 4

The second optic transmitter 100B and the second optic receiver 200B likewise share a common PAT-unit that has the functionality of a second transmission unit 130B and a second receiving unit 210B. The common PAT-unit may provide common facilities for pointing and receiving. The common PAT-unit in its functionality as the second receiving unit 210B receives a bundled optic input signal Orec_{B} resulting from the transmitted bundled optic output signal OtransA after its propagation through free space 400 to the second optic transceiver 20B. The wavelength division demultiplexer 220B of the second optic transceiver 20B demultiplexes the bundled optic input signal Orec_{B} into respective optic signal components I1_{B}, I2_{B}, ...,In_{B}. The wavelength division demultiplexer 220B may be implemented as a photonic integrated circuit, for example available from Lionix, but may alternatively be implemented as a fiber based unit.

In response to the respective optic signal components I1_{B}, I2_{B}, ...,In_{B} respective photon counters 230_1, 230_2, ...., 230_n) provide respective photon count signals C1_{B}, C2_{B}, ..., Cn_{B} for these optic signal components. The second modem 300B in response to these photon count signals C1_{B}, C2_{B}, ..., Cn_{B} provides an output signal to the external interface ExtB. One example of a photon counter for this purpose is a superconducting nanowire single photon detector (SNSPD) as provided by Single Quantum. This detector is constituted by a thin film of superconducting material shaped into a meandering nanowire. Once a single photon is absorbed in the meandering nanowire, superconductivity is locally broken. As a result, the current is directed towards an amplifier which generates a voltage pulse. After the photon is absorbed, superconductivity recovers in the nanowire within a short time and the SNSPD is ready to detect the next photon. Another detector suitable for this purpose is an avalanche photodiode (APD), for example a Silicon based APD or an InGaAs based APD. These are available for example from Hamamatsu.

In the embodiment shown, the optic communication arrangement 20 is provided in a symmetric manner. I.e. the first optic transceiver 20A and the second optic transceiver 20B are identical, or at least have the same functionality. According, in operation a signal provided at the external interface ExtB may be transmitted to the external interface as follows. The second modem 300B receives input signals, e.g. electric or optic input signals, from the external interface ExtB and issues a set of control signals CO1_{B},...,Con_{B}. In response thereto respective lasers 110B_1,...,n provide respective optic output signals O1_{B},...,On_{B} in respective wavelength channels with a respective wavelength range. The wavelength division multiplexer 120B bundles these optic output signals into a bundled optic output signal Oc_{B} and provides the bundled optic output signal Oc_{B} to the PAT-unit 130B+210B which transmits the bundled optic output signal Oc_{B} as a transmitted optic output signal Otrans_{B} through free space 400 to the first optic transceiver 20A. If desired, these functionalities can be implemented by a common photonic phased array. The common PAT-unit in its functionality as the first receiving unit 210A receives a bundled optic input signal OrecA resulting from the transmitted bundled optic output signal Otrans_{B} after its propagation through free space 400 to the first optic transceiver 20A. The wavelength division demultiplexer 220A of the first optic transceiver 20A demultiplexes the bundled optic input signal OrecA into respective optic signal components I1_{A}, I2_{A}, ...,In_{A}. In response thereto respective photon counters 230_1, 230_2, ...., 230_n) provide respective photon count signals C1_{A}, C2_{A}, ..., Cn_{A} for these optic signal components. The first modem 300A in response to these photon count signals C1_{A}, C2_{A}, ..., Cn_{A} provides an output signal to the external interface ExtA.

Various options are available to provide the PAT-units 130A+210A and 130B+210B with pointing and receiving means. According to a first option these are provided as bulk optics, e.g. using actuated mirrors. According to another option the pointing and receiving means may be implemented in a photonic integrated circuit, e.g. as a photonic phased array.

FIG. 4 shows in more detail another embodiment of the optic communication arrangement 20 of FIG. 2. Parts therein corresponding to those in FIG. 3 have the same reference number. In the embodiment shown in FIG. 4 the optic transceiver 20A comprises in addition to the elements presented in, and described with reference to FIG. 3 a beacon laser/amplifier unit 140A and optics multiplexing unit 150A.

The beacon laser/amplifier unit 140A is a regular (space qualified) laser, optional provided with an optic amplifier to boost the power. A high power beacon can be used for very fast characterization of atmospheric disturbance. An optic beacon signal facilitates acquisition using adaptive optics (adaptive optics for correction of atmospheric disturbances in order to enable a coupling from free space to a fiber or PIC based optical component. A beacon is not needed if the optic signal is not transmitted in free space characterized by atmospheric disturbance but for example via a fiber or PIC coupling.

Likewise, the optic transceiver 20B comprises in addition to the elements presented in, and described with reference to FIG. 3 a beacon laser/amplifier unit 140B and optics multiplexing unit 150B. For clarity only aspects differing from the embodiment of FIG. 3 are described in more detail. In operation, the beacon laser/amplifier unit 140A is controlled to issue a high power beacon signal OB_{A}, and the optics multiplexing unit 150A bundles this optic signal with the bundled optic signal OCA into the bundled optic signal OD_{A}. It may be contemplated to provide the beacon signal OB_{A} as a further optic input signal to the wavelength division multiplexer 120A. However, in view of the fact that the beacon signal OB_{A} has a relatively high power it is preferred to use the separate optics multiplexing unit 150A. Therewith it is still possible to use low power optics means for multiplexing the optic output signals O1_{A},...,On_{A} in allowing integration in a photonic integrated circuit. The separate optics multiplexing unit 150A that multiplexes the high power beacon signal OB_{A}, with the bundled optic signal OCA into the bundled optic signal OD_{A} can for example be implemented with fiber optic means.

This bundled optic signal OD_{A} is provided to the pointing acquisition and tracking unit (PAT-unit) 130A+210A which transmits the bundled optic output signal OD_{A} as a transmitted optic output signal to the second optic transceiver 20B. The high power beacon signal OB_{A}, may be time-multiplexed with the bundled optic signal OCA into the bundled optic signal OD_{A}, so that the PAT-unit 130B+210B can periodically align itself during relatively short time intervals using the relatively high power beacon signal OB_{A}, and information transmission can take place during the remaining time intervals via the bundled optic signal Oc_{A} Alternatively, the optionally pulsed beacon signal OB_{A} may be transmitted while information transmission takes place.

Likewise, in the optic transceiver 20B, the beacon laser/amplifier unit 140B is controlled to issue a high power beacon signal OB_{B}, and the optics multiplexing unit 150B bundles this optic signal with the bundled optic signal OC_{B} into the bundled optic signal OD_{B}. This bundled optic signal OD_{B} is provided to the PAT-unit 130B+210B which transmits the bundled optic output signal OD_{B} as a transmitted optic output signal to the first optic transceiver 20A.

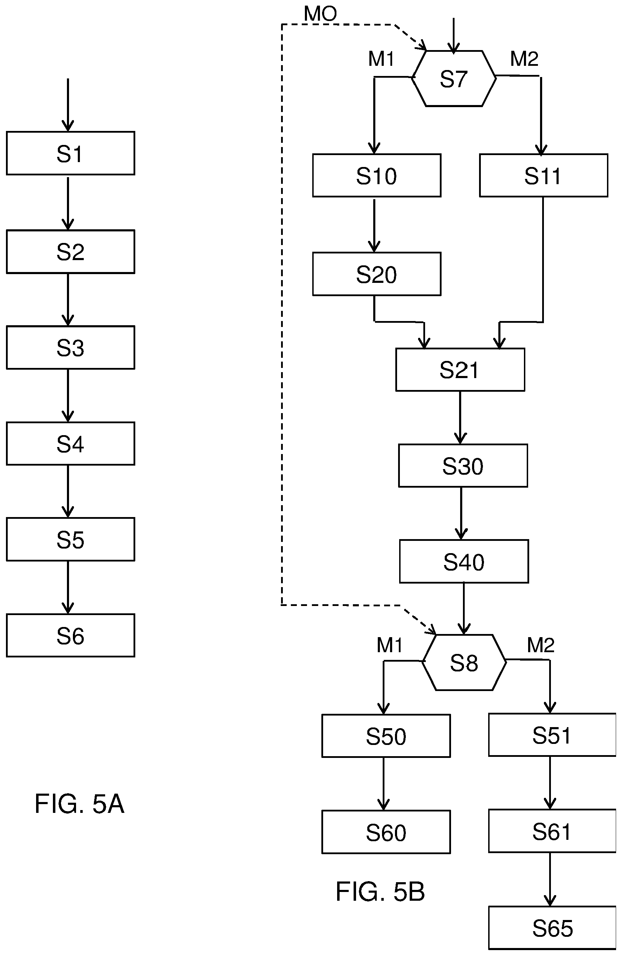

FIG. 5A schematically shows an embodiment of an optic communication method as claimed herein comprising method steps S1 - S6.

In step S1 respective optic output signals are provided in respective wavelength channels having a respective wavelength range.

In step S2 the optic output signals provided in step S1 are bundled into a bundled optic output signal.

In step S3 the bundled optic output signal is transmitted.

In step S4 a bundled optic input signal resulting from the bundled optic output signal after its propagation is received.

In step S5 the bundled optic input signal is demultiplexed into respective optic signal components in the respective wavelength channels.

In step S6 respective photon count signals are provided for the respective optic signal components.

FIG. 5B shows another embodiment of the claimed optic communication method. Therein method steps S10, S20, S30, S40, S50 and S60 correspond to steps S1, S2, S3, S4, S5 and S6 respectively. In coupled mode selection steps S7, S8 dependent on an operational mode MO, it is determined whether an information transmission is performed in a first operational mode (MO=M1), or an alignment/calibration procedure is performed in a second operational mode (MO=M2). In the latter case operation proceeds as follows. An optic beacon signal with a relatively high power is generated in step S11. In step S21, the optic beacon signal is aligned, so that it has at least substantially the same beam characteristics, i.e. at least substantially the same direction and divergence as that of the bundled optic output signal that would be obtained in step S20. In step S30 the beacon signal is transmitted in the same manner as the bundled optic output signal would be transmitted in step S3 of FIG. 5A or in step S30 in FIG. 5B when operating in the first operational mode M1. Likewise, in step S40 an input beacon signal resulting from the beacon signal after its propagation is received in the same manner as the bundled optic input signal would be received in step S4 of FIG. 5A or in step S40 in FIG. 5B when operating in the first operational mode M1. Furthermore in step S51, the input beacon signal is guided to a detector facility to be detected in step S61 and in step S65 the detection signals are used for mutual alignment of the transmitting and receiving side.

## Claims

1. An optic communication system (10) comprising:
- a first module (100) comprising:
- a plurality of lasers (110_1, 110_2, ..., 110_n) for providing respective optic output signals (O1, O2, ..., On) in respective wavelength channels with a respective wavelength range; and
- a wavelength division multiplexer (120) to multiplex said respective optic output signals into a bundled optic output signal (Oc);
- a transmission unit (130) to transmit the bundled optic output signal (Oc) as transmitted optic output signal (Otrans);
- a second module (200) comprising:
- a receiving unit (210) to receive a bundled optic input signal (Orec) resulting from the bundled optic output signal after its propagation to the receiving unit;
- a wavelength division demultiplexer (220) to demultiplex the bundled optic input signal into respective optic signal components (I1, I2, ...,In) in said respective wavelength channels; and
- respective photon counters (230_1, 230_2, ...., 230_n) to provide respective photon count signals (C1, C2, ..., Cn) for said respective optic signal components.

2. An optic transmitter (100) comprising:
- a plurality of lasers (110_1, 110_2, ..., 110_n) for providing respective optic output signals (O1, O2, ..., On) in respective wavelength channels with a respective wavelength range; and
- a wavelength division multiplexer (120) to bundle said respective optic output signals into a bundled optic output signal (Oc);
- a transmission unit (130) to transmit the bundled optic output signal as a transmitted bundled optic output signal (Otrans).

3. The optic transmitter (100) according to claim 2, wherein the plurality of lasers is integrated in a single photonic integrated circuit (112).

4. The optic transmitter (100) according to claim 3, wherein the wavelength division multiplexer (120) is integrated with the plurality of lasers in the single photonic integrated circuit (122).

5. The optic transmitter (100) according to one of the claims 2, 3 or 4, wherein the plurality of lasers (110_1, 110_2, ..., 110_n) is configured to provide their optic output signals in a pulse wise manner.

6. The optic transmitter (100) according to claim 5, wherein the optic output signals are provided as single photon pulses.

7. An optic receiver (200) comprising:
- a receiving unit (210) to receive a bundled optic input signal (Orec) resulting from the transmitted bundled optic output signal (Otrans) after its propagation to the receiving unit;
- a wavelength division demultiplexer (220) to demultiplex the bundled optic input signal into respective optic signal components (Oin_1, Oin_2, ...,Oin_n) in respective wavelength channels having a respective wavelength range; and
- respective detectors (230a, 230b, ...., 230n) to provide respective photon count signals (C1, C2, ..., Cn) for said respective optic signal components.

8. The optic receiver (200) according to claim 7, wherein the wavelength division demultiplexer (220) and the respective detectors (230a, 230b, ...., 230n) are integrated in a single photonic integrated circuit (215).

9. An optic communication arrangement (20) comprising a first and a second optic transmitter (100A, 100B) according to claim 2, 3 or 4 and a first and a second optic receiver (200A, 200B) according to claim 5 or 6, wherein the first optic transmitter (100A) and the first optic receiver (200A) are arranged at a first location and the second optic transmitter (100B) and the second optic receiver (200B) are arranged at a second location remote from the first location, wherein the first optic transmitter (100A) is configured to transmit a first bundled optic output signal (OtransA) to the second optic receiver (200B) and the second optic transmitter (100A) is configured to transmit a second bundled optic output signal (OtransB) to the first optic receiver (200A).

10. An optic communication arrangement (20) according to claim 9, wherein the first optic transmitter (100A) and the first optic receiver (200A) are provided as a first photonic integrated circuit (22) at the first location and the second optic transmitter (100B) and the second optic receiver (200B) are provided as a second photonic integrated circuit (24) at the second location.

11. An optic communication method comprising:
- providing (S1) respective optic output signals (O1, O2, ..., On) in respective wavelength channels;
- multiplexing (S2) said respective optic output signals (O1, O2, ..., On) into a bundled optic output signal (Oc);
- transmitting (S3) the bundled optic output signal;
- receiving (S4) a bundled optic input signal (Orec) resulting from the transmitted bundled optic output signal (Otrans) after its propagation;
- demultiplexing (S5) the bundled optic input signal (Orec) into respective optic signal components (Oin_1, Oin_2, ...,Oin_n) in said respective wavelength channels; and
- providing (S6) respective photon count signals (C1, C2, ..., Cn) for said respective optic signal components.
